(19) Europäisches Patentamt
European Patent Office
Office européen des brevets

(11) **EP 1 612 595 A1**

(12) **EUROPEAN PATENT APPLICATION**
published in accordance with Art. 158(3) EPC

(43) Date of publication:
**04.01.2006 Bulletin 2006/01**

(51) Int Cl.:
*G02F 1/1334* (2000.01)   *G02F 1/13* (1974.07)

(21) Application number: **03786385.9**

(22) Date of filing: **26.12.2003**

(86) International application number:
**PCT/JP2003/017040**

(87) International publication number:
**WO 2004/088402 (14.10.2004 Gazette 2004/42)**

(84) Designated Contracting States:
**AT BE BG CH CY CZ DE DK EE ES FI FR GB GR HU IE IT LI LU MC NL PT RO SE SI SK TR**

(30) Priority: **31.03.2003 JP 2003095670**

(71) Applicant: **Nippon Sheet Glass Co.,Ltd.**
**Tokyo 105-8552 (JP)**

(72) Inventor: **YANO, Yuichi,**
**NIPPON SHEET GLASS COMPANY, LIMITED**
**Tokyo 105-8552 (JP)**

(74) Representative: **Kohler Schmid Möbus**
**Patentanwälte**
**Ruppmannstrasse 27**
**70565 Stuttgart (DE)**

(54) **LIGHT CONTROLLER AND LAMINATED GLASS**

(57)     A light adjuster, according to which the dependence of the haze on the viewing angle when applying a voltage can be reduced, and high shielding ability when not applying a voltage, driving with a low voltage when applying a voltage, and reduced haze when applying a voltage can be realized. The light adjuster 100 has a liquid crystal layer 104 comprised of a transparent polymer film 101 made of a latex and liquid crystal capsules 103 filled with nematic liquid crystalline rod-like molecules 102. The birefringence $\Delta n$ of the nematic liquid crystalline rod-like molecules 102 is set in a range of $0.12 \geq \Delta n \geq 0.08$. The product of the capsule diameter (D1) of the liquid crystal capsules 103 and the birefringence $\Delta n$ is set in a range of $0.55\mu m \geq \Delta n \times D1 \geq 0.45\mu m$. In a cumulative value distribution of values of the diameters of voids converted in terms of the diameters of spheres having the same volumes as the voids, the ratio D3/D2 of the diameter D3 indicating the maximum diameter in an area where a proportion of the cumulative number of diameter values counted from the minimum converted value of the diameters of the voids is 90%, to the diameter D2 indicating the maximum diameter in an area where a proportion of the cumulative number of diameter values counted from the minimum converted value of the diameters of the voids is 10%, satisfies $2.5 \times D1 \geq D3/D2$.

**FIG. 1**

**Description**

Technical Field

The present invention relates to a light adjuster having a liquid crystal material therein, and a laminated glass containing the light adjuster, and in particular relates to a light adjuster that enables visual field control, and a laminated glass containing the light adjuster.

Background Art

Hitherto, electrochromic devices (hereinafter referred to as "EC devices") have been known as devices such as light adjusters having a light adjusting capability of enabling the transmissivity to be freely adjusted (hereinafter referred to as "light adjusting devices"). Such an EC device is, for example, made from a material that undergoes a spectral change upon an electrochemical redox reaction, such as tungsten oxide or prussian blue, and controls the amount of light transmitted by absorbing light. However, because such an EC device is current driven, if the EC device is made to have a large area, then a large voltage drop arises, the response speed drops markedly, and degradation of constituent materials due to electrochemical changes and so on occurs during prolonged passing of a current; such an EC device thus cannot be used as a light adjuster that is required to be durable.

In recent years, voltage driven light adjusting devices have thus been used as light adjusters instead of such current driven EC devices. For example, nematic curvilinear aligned phase (NCAP) liquid crystal light adjusters are known as such voltage driven light adjusting devices. Such a nematic liquid crystal light adjuster is made from a liquid crystal material, and has excellent durability, and can easily be made to have a large area (see Published Japanese Translation of PCT Application (Kohyo) No. S58-501631).

In general, such a light adjuster is comprised of a liquid crystal layer having a light adjusting function in which a plurality of voids are filled with liquid crystals, and a pair of PET films that sandwich the liquid crystal layer therebetween; transparent electrically conductive films are provided on facing surfaces of the PET films so as to be bonded to the liquid crystal layer, and a voltage is applied to the liquid crystal layer via this pair of transparent electrically conductive films. The liquid crystal layer is formed of a transparent polymer film having a plurality of voids therein, and each void is filled with liquid crystals so as to form a liquid crystal capsule.

According to such a light adjuster, when a voltage is not being applied, the liquid crystal molecules line up along the curved wall surfaces of the liquid crystal capsules, and are thus not arranged along the direction of travel of transmitted light transmitted through the liquid crystal capsules; the optical path of the transmitted light thus meanders around, and incident light is scattered at boundary layers between the liquid crystal capsules and the polymer film, and hence the liquid crystal layer becomes cloudy. On the other hand, when a voltage is applied, the liquid crystal molecules line up along the direction of the electric field produced, and at this time, due to the liquid crystal layer being made from a material such that the ordinary refractive index no of the liquid crystal molecules matches the refractive index np of the polymer film, it becomes such that boundary layers between the liquid crystal capsules and the polymer film do not exist optically, and hence transmitted light incident on the liquid crystal layer can be transmitted unhindered, whereby the liquid crystal layer becomes transparent.

Due to the above principle, the light adjuster has a visual field controlling capability of shutting off the visual field through scattering of incident light when a voltage is not being applied, and securing the visual field through allowing incident light to be transmitted unhindered when a voltage is being applied.

Due to this visual field controlling capability, such a light adjuster is suitable for use as a partition or the like either alone or in the form of a laminated glass sandwiched between a plurality of glass plates.

Here, a small degree of scattering remaining in the transparent state is referred to as "haze". There are demands for such a light adjuster not only to have high shielding ability when not applying a voltage, and to be able to carry out driving with a low voltage when applying a voltage, but also to reduce the haze when applying a voltage. Furthermore, in the case that such a light adjuster is used in window glass of buildings or automobiles, because such window glass has a large area, in addition to reducing the haze when applying a voltage, there are also demands for the dependence of the haze on the viewing angle to be low.

It is known that the dependence of the haze on the viewing angle when applying a voltage using a sinusoidal power source can be reduced by using liquid crystals having a low birefringence (hereinafter referred to as "Δn") (see Japanese Laid-open Patent Publication (Kokai) No. H03-116019).

By using liquid crystals having low Δn, the dependence of the haze on the viewing angle when applying a voltage is thus improved, but the shielding ability when not applying a voltage tends to drop. In this case, it is necessary to make the film thickness (the thickness of the liquid crystal layer) higher so as to compensate for the drop in the shielding ability when not applying a voltage. However, there is a problem that if the film thickness is made higher, then the driving voltage and the haze when applying a voltage are increased.

It is an object of the present invention to provide a light adjuster and a laminated glass, according to which the dependence of the haze on the viewing angle when applying a voltage can be reduced, and high shielding ability when not applying a voltage, driving with a low voltage when applying a voltage, and reduced haze when applying a voltage can be realized.

Disclosure of the Invention

To attain the above object, in a first aspect of the present invention, there is provided a light adjuster comprising a liquid crystal layer having a plurality of voids therein, each of the voids being filled with a liquid crystal material, a pair of substrates that sandwich the liquid crystal layer therebetween, at least one of the substrates being transparent, and transparent electrically conductive films provided on respective facing surfaces of the substrates, wherein the liquid crystal material has a birefringence $\Delta n$ in a range of $0.12 \geq \Delta n \geq 0.08$, a product of a diameter D1 of a sphere having a same volume as a volume of each of the voids and the birefringence $\Delta n$ is in a range of $0.55\mu m \geq \Delta n \times D1 \geq 0.45\mu m$, and in a cumulative value distribution of values of the diameters of voids converted in terms of diameters of spheres having the same volumes as the voids, a ratio D3/D2 of a diameter D3 indicating a maximum diameter in an area where a proportion of a cumulative number of diameter values counted from a minimum converted value of the diameters of the voids is 90%, to a diameter D2, indicating a maximum diameter in an area where the proportion of the cumulative number of diameter values counted from the minimum converted value of the diameters of the voids is 10%, satisfies $2.5 \times D1 \geq D3/D2$.

To attain the above object, in a second aspect of the present invention, there is provided a laminated glass comprising, a light adjuster comprising a liquid crystal layer having a plurality of voids therein, each of the voids being filled with a liquid crystal material, a pair of substrates that sandwich the liquid crystal layer therebetween, at least one of the substrates being transparent, and transparent electrically conductive films provided on respective facing surfaces of the substrates, wherein the liquid crystal material has a birefringence $\Delta n$ in a range of $0.12 \geq \Delta n \geq 0.08$, a product of a diameter D1 of a sphere having a same volume as a volume of each of the voids, and the birefringence $\Delta n$ is in a range of $0.55\mu m \geq \Delta n \times D1 \geq 0.45\mu m$, and in a cumulative value distribution of values of the diameters of voids converted in terms of diameters of spheres having the same volumes as the voids, a ratio D3/D2 of a diameter D3 indicating a maximum diameter in an area where a proportion of a cumulative number of diameter values counted from a minimum converted value of the diameters of the voids is 90%, to a diameter D2 indicating a maximum diameter in an area where the proportion of the cumulative number of diameter values counted from the minimum converted value of the diameters of the voids is 10%, satisfies $2.5xD1 \geq D3/D2$.

Brief Description of the Drawings

FIG. 1 is a sectional view of a light adjuster according to an embodiment of the present invention; and
FIG. 2 is a flowchart of a process for manufacturing the light adjuster of FIG. 1.

Best Mode of Carrying Out the Invention

The present invention will now be described in detail with reference to the drawings showing light adjusters according to embodiments thereof.

First, a description will be given of the approach to setting $\Delta n$ of liquid crystals in the present invention, a diameter D1 of a sphere having the same volume as the volume of each of voids (hereinafter referred to as the "capsule diameter"), and a ratio of a diameter D2 to a diameter D3 (hereinafter referred to as the "capsule diameter distribution") in a cumulative value distribution of values of the diameters of voids converted in terms of the diameters of spheres having the same volumes as the voids, the diameter D2 indicating the maximum diameter in an area where a proportion of the cumulative number of diameter values counted from the minimum converted value of the diameters of the voids is 10%, and the diameter D3 indicating the maximum diameter in an area where a proportion of the cumulative number of diameter values counted from the minimum converted value of the diameters of the voids is 90%.

In general, the properties required in practice of a light adjuster used in window glass or the like are a visibility (V), which indicates the shielding ability, as described below, of not more than 0.1, and a haze when applying a voltage of not more than 10%. Here, the visibility (V) is an index that quantitatively represents the shielding ability when not applying a voltage, and can be determined by arranging a light source, a screen, the light adjuster having the liquid crystals therein, and a spectral luminance meter in this order on the same optical axis, measuring white stripe luminance (Iw) and black stripe luminance (Ib) at a wavelength of 700nm of a zebra pattern on the screen illuminated by the light source using the spectral luminance meter via the light adjuster, and then using undermentioned equation (1).

$$\text{Visibility (V)} = (Iw-Ib)/(Iw+Ib) \ldots (1)$$

Moreover, the haze can be measured using a haze meter (e.g. a "Suga Haze Meter" made by Suga Test Instruments Co., Ltd.). The haze can be determined using undermentioned equation (2) from the relationship between total transmissivity (Tt), which is the ratio of the amount of transmitted light over all viewing angles to the amount of incident light, and parallel transmissivity (Tp), which is the ratio of the amount of transmitted light parallel to the incident light to the amount of incident light.

$$\text{Haze} = (Tt-Tp)/Tt \ldots (2)$$

Here, as described earlier, by using liquid crystals having low $\Delta n$, the haze when applying a voltage is reduced; if $\Delta n$ is greater than 0.12, then sufficiently low haze is not obtained. On the other hand, if $\Delta n$ is low, then the shielding ability when not applying a voltage drops. For example, if $\Delta n$ is lower than 0.08, then even if this is suitably combined with the capsule diameter and the capsule diameter distribution, the visibility (V) will rise, and sufficiently high shielding ability will not be obtained. $\Delta n$ of the liquid crystals must thus be in a range of 0.08 to 0.12.

Moreover, there exist ranges of the capsule diameter (D1) and the capsule diameter distribution (D3/D2) corresponding to this range of $\Delta n$ of the liquid crystals for which the shielding ability when not applying a voltage becomes highest.

First, regarding the capsule diameter, the product $\Delta n \times D1$ of $\Delta n$ and the capsule diameter (D1) must be in the range represented by undermentioned equation (3).

$$0.55 \geq \Delta n \times D1 \geq 0.45 \ldots (3)$$

Here, taking $\Delta n$ to be fixed, if $0.45 > \Delta n \times D1$, then the capsule diameter in this range is lower than the capsule diameter satisfying the equation (3), and in this case the amount of scattering will increase accompanying the reduction in the capsule diameter, whereby the mean transmissivity in the visible region will drop, but on the other hand the visibility (V) will increase due to diffraction of light on the long wavelength region, and hence ultimately the shielding ability when not applying a voltage will drop.

Moreover, if $\Delta n \times D1 > 0.55$, then the capsule diameter in this range is greater than the capsule diameter satisfying the equation (3), and in this case the amount of scattering will decrease accompanying the increase in the capsule diameter, whereby the visibility (V) will increase, and hence again the shielding ability when not applying a voltage will drop.

In either case, by making the film thickness higher, the visibility (V) when not applying a voltage can be reduced, and hence the shielding ability can be improved, but the haze when applying a voltage will be increased, and hence the performance required of the light adjuster will not be obtained.

Here, the performance required of the light adjuster is achieved in the case that the capsule diameter (D1) and the capsule diameter distribution (D3/D2) satisfy undermentioned equation (4).

$$2.5 \times D1 \geq D3/D2 \ldots (4)$$

In the case that the capsule diameter distribution (D3/D2) is greater than $2.5 \times D1$, i.e. the capsule diameter distribution (D3/D2) is broader than the capsule diameter distribution satisfying equation (4), in general the proportion of large capsule diameters (D1) will increase, and hence there will be hardly any scattering in the visible region, and thus the visibility (V) will increase, and hence the shielding ability when not applying a voltage will drop. In this case, the visibility (V) can be reduced, and hence the shielding ability can be improved, by reducing the capsule diameter (D1) or increasing the film thickness, but again the haze when applying a voltage will increase, and hence the performance required of the light adjuster will not be obtained.

Based on the above considerations, according to the present invention, despite using a liquid crystal material having low $\Delta n$, by using a suitable combination of $\Delta n$ of the liquid crystal material, the capsule diameter (D1), and the capsule diameter distribution (D3/D2), a liquid crystal light adjuster can be realized for which driving with a low voltage is possible and the haze is low when applying a voltage, with no impairment of the shielding ability when not applying a voltage.

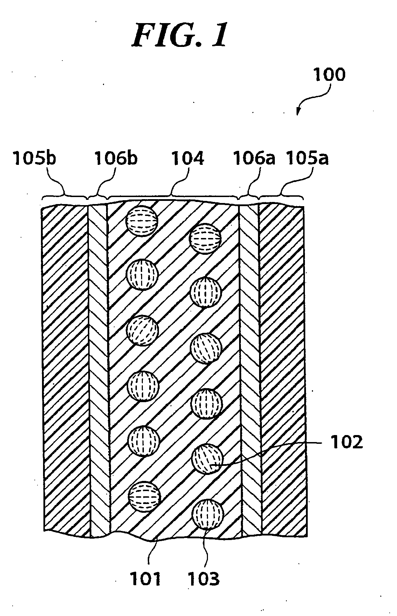

FIG. 1 is a sectional view of a light adjuster according to an embodiment of the present invention.

In FIG. 1, the light adjuster 100 is comprised of a liquid crystal layer 104 comprised of a transparent polymer film 101 made of a latex having a plurality of voids therein and liquid crystal capsules 103 formed through the voids being filled with nematic liquid crystalline rod-like molecules 102, a pair of PET films 105a and 105b that sandwich the liquid crystal layer 104 therebetween, and transparent electrically conductive films 106a and 106b that are provided on respective facing surfaces of the pair of PET films 105a and 105b; the pair of transparent electrically conductive films 106a and 106b apply a voltage to the liquid crystal layer 104.

According to this light adjuster 100, when a voltage is not being applied to the liquid crystal layer 104, the nematic liquid crystalline rod-like molecules 102 line up along the curved wall surfaces of the liquid crystal capsules 103, and are thus not arranged along the direction of travel of transmitted light transmitted through the liquid crystal capsules 103; the optical path of the transmitted light thus meanders around, and incident light is scattered at boundary layers between the liquid crystal capsules 103 and the polymer film 101, and hence the liquid crystal layer 104 becomes cloudy. On the other hand, when a voltage is applied to the liquid crystal layer 104, the nematic liquid crystalline rod-like molecules 102 line up along the direction of the electric field produced, and at this time, due to the liquid crystal layer 104 being made from a material such that the ordinary refractive index $n_o$ of the nematic liquid crystalline rod-like molecules 102 matches the refractive index $n_p$ of the polymer film 101, it becomes such that boundary layers between the liquid crystal capsules 103 and the polymer film 101 do not exist optically, and hence transmitted light incident on the liquid crystal layer 104 can be transmitted unhindered, whereby the liquid crystal layer 104 becomes transparent.

Due to the above principle, the light adjuster 100 has a visual field controlling capability of shutting off the visual field through scattering of incident light when a voltage is not being applied, and securing the visual field through allowing incident light to be transmitted unhindered when a voltage is being applied.

Next, a description will be given of a method of manufacturing the light adjuster 100.

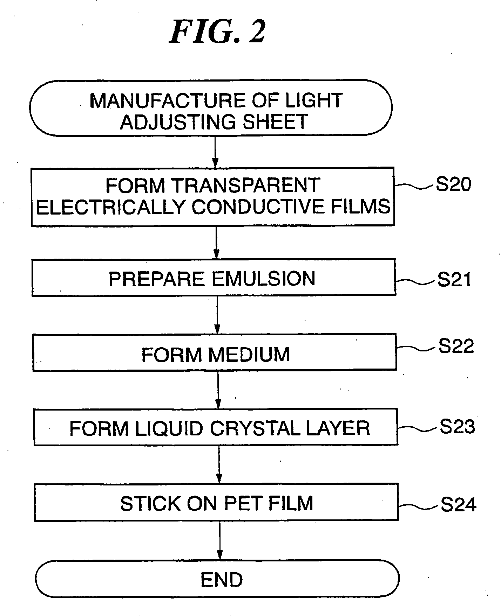

FIG. 2 is a flowchart of a process for manufacturing the light adjuster 100 of FIG. 1.

In FIG. 2, first, a transparent electrically conductive film 106a or 106b made of ITO is formed on one surface of each of 175$\mu$m-thick PET films 105a and 105b (step S20).

Next, a liquid crystal material and an aqueous phase are mixed together to prepare an emulsion, and the prepared emulsion is added to a latex, or else a liquid crystal material and a latex are mixed together directly to prepare an emulsion. At this time, to form stable liquid crystal particles, it is preferable to add a surfactant to the emulsion. The mixing together of the liquid crystal material and the aqueous phase or the latex is carried out using a mixer such as a blender or a colloid mill (step S21). The capsule diameter (D1) of the liquid crystal capsules 103 can be controlled to a desired value through the rotational speed of the mixer, and here D1 is controlled to be approximately 5$\mu$m.

A crosslinking agent for crosslinking the latex in the prepared emulsion is then added to form a medium (step S22). The amount added of the crosslinking agent is set, in correspondence with the amount of solids in the latex, to be an amount capable of crosslinking all of the latex in terms of solids.

The medium thus formed is then applied onto the transparent electrically conductive film 106a using a suitable means such as a knife blade, and the medium applied is dried, whereby crosslinking of the latex by the crosslinking agent is made to progress, and hence a liquid crystal layer 104 is formed (step S23).

Next, the PET film 105b is stuck onto the liquid crystal layer 104 thus formed such that the transparent electrically conductive film 106b contacts the liquid crystal layer 104 (step S24), thus completing the manufacturing process.

For the light adjuster 100, utilizing the property of a liquid crystal material that the haze when applying a voltage is reduced if $\Delta n$ is low, $\Delta n$ of the nematic liquid crystalline rod-like molecules 102 is set to be low. Specifically, if $\Delta n$ is greater than 0.12, then sufficiently low haze will not be obtained, whereas if $\Delta n$ is too low, then the shielding ability when not applying a voltage will drop; $\Delta n$ of the nematic liquid crystalline rod-like molecules 102 is thus set to $0.08 \leq \Delta n \leq 0.12$.

Furthermore, regarding the capsule diameter (D1) of the liquid crystal capsules 103, if the capsule diameter (D1) is too low, then the amount of scattering will increase accompanying the reduction in the capsule diameter, whereby the mean transmissivity in the visible region will drop, but the visibility (V) will increase due to diffraction of light on the long wavelength region by the liquid crystal capsules 103, and hence ultimately the shielding ability when not applying a voltage will drop. On the other hand, if the capsule diameter (D1) is too high, then the amount of scattering will decrease accompanying the increase in the capsule diameter, whereby the visibility (V) will increase, and hence again the shielding ability when not applying a voltage will drop. With the light adjuster 100, the product $\Delta n \times D1$ of $\Delta n$ and the capsule diameter (D1) is thus set to be in a range of $0.55 \geq \Delta n \times D1 \geq 0.45$.

Here, taking $\Delta n$ to be fixed, if $0.45 > \Delta n \times D1$, then this indicates that the capsule diameter is too low, whereas if $\Delta n \times D1 > 0.55$, then this indicates that the capsule diameter is too high.

In general, making the film thickness of the liquid crystal layer 104 higher is effective in reducing the visibility (V) and thus improving the shielding ability, but if the film thickness of the liquid crystal layer 104 is merely made higher, then the haze when applying a voltage will increase, and hence the performance required of the light adjuster 100 will not be attained.

Moreover, with the liquid crystal material, if the proportion of liquid crystal capsules 103 having a large capsule diameter is high increases, then there will be hardly any scattering of transmitted light in the visible region, and thus the visibility (V) will increase, and hence the shielding ability when not applying a voltage will drop. In this case, if the capsule diameter (D1) is merely reduced, then the visibility (V) will drop, and hence the shielding ability will be improved, but the haze when applying a voltage will increase, and hence the performance required of the light adjuster will not be obtained.

For the light adjuster 100, the capsule diameter (D1) and the capsule diameter distribution (D3/D2) are thus set so as to satisfy the relationship $2.5 \times D1 \geq D3/D2$.

From the above, for the light adjuster 100 according to the present embodiment, $\Delta n$ of the nematic liquid crystalline rod-like molecules 102 is set to $0.08 \leq \Delta n \leq 0.12$, the product $\Delta n \times D1$ of $\Delta n$ and the capsule diameter (D1) is set to be in a range of $0.55\mu m \geq \Delta n \times D1 \geq 0.45\mu m$, and the capsule diameter (D1) and the capsule diameter distribution (D3/D2) are set so as to satisfy the relationship $2.5 \times D1 \geq D3/D2$. As a result, the dependence of the haze on the viewing angle when applying a voltage can be reduced, and high shielding ability when not applying a voltage, driving with a low voltage when applying a voltage, and reduced haze when applying a voltage can be realized.

The liquid crystals in the light adjuster 100 according to the present embodiment are not limited to being nematic liquid crystalline rod-like molecules 102, but rather cholesteric liquid crystals or smectic liquid crystals may be used.

As the material of the polymer film 101 in the light adjuster 100 according to the present embodiment, either an inorganic or organic material can be used so long as this material has a refractive index n matching the ordinary refractive index $n_o$ of the liquid crystal material that is nematic or the like, and is able to hold the liquid crystal material in the form of a plurality of capsules; however, it is particularly preferable to use a latex that is optically homogeneous and has good adhesion to the transparent electrically conductive films 106 formed on the PET films 105, whereby a light adjuster 100 having excellent physical durability can be provided.

Moreover, instead of the PET films 105 having the transparent electrically conductive films 106 formed thereon in the light adjuster 100 according to the present embodiment, glass sheets, plastic films or the like each having an indium tin oxide (ITO) film or a tin oxide ($SnO_2$) film formed on a surface thereof may be used.

Next, an example according to the present invention will be described in detail.

(Examples)

0.5wt% of an IGEPAL CO-610 surfactant (made by General Aniline & Filma Inc.) was added to ZLI-4171 liquid crystals (made by MERCK & CO., Inc, $\Delta n = 0.097$), the liquid crystals to which the surfactant had been added were added to Neorez R-967 (made by AstraZeneca PLC) containing 40wt% of latex particles such that the liquid crystal proportion was 0.62, and then stirring was carried out for 10 minutes at 7000 rpm using a homogenizer, thus obtaining an emulsion. Next, while gently mixing the emulsion, a CX-100 crosslinking agent (made by AstraZeneca PLC) was added in a proportion of 3wt% to the emulsion. The emulsion to which the crosslinking agent had been added was then applied onto an ITO film-possessing PET film using a doctor blade, and drying was carried out.

After the applied emulsion had been dried, another ITO film-possessing PET film was stuck onto the emulsion, thus obtaining a light adjuster. The thickness of the light adjuster was $20\mu m$.

For the above light adjuster, the capsule diameter (D1) of the liquid crystal capsules was $5\mu m$, and the capsule diameter distribution (D3/D2) was 11.5.

The visibility of the light adjuster obtained as described above was measured using a multifunctional multichannel spectrophotometer MCPD-1000 (28C) (made by Otsuka Electronics Co., Ltd.), and the haze upon applying a low voltage (sinusoidal, 100V, 50Hz) was measured using a haze meter, whereupon the measurement results were that the visibility (V) was 0.08 and the haze was 8%. It was thus found that reduced haze when applying a voltage could be realized while still securing high shielding ability when not applying a voltage.

It was thus found that for a light adjuster, if $\Delta n$ satisfies $0.08 \leq \Delta n \leq 0.12$, the product $\Delta n \times D1$ of $\Delta n$ and the capsule diameter (D1) satisfies $0.55\mu m \geq \Delta n \times D1 \geq 0.45\mu m$, and the capsule diameter (D1) and the capsule diameter distribution (D3/D2) satisfy $2.5 \times D1 \geq D3/D2$, then the light adjuster has sufficient visual field controlling performance, it being possible to realize high shielding ability when not applying a voltage, driving with a low voltage when applying a voltage, and reduced haze when applying a voltage.

Industrial Applicability

As described above in detail, according to the light adjuster and the laminated glass of the present invention, the liquid crystal material has a birefringence $\Delta n$ in a range of $0.12 \geq \Delta n \geq 0.08$, the product of the diameter D1 of a sphere having the same volume as the volume of each of the voids and the birefringence $\Delta n$ is in a range of $0.55\mu m \geq \Delta n \times D1 \geq 0.45\mu m$, and, in a cumulative value distribution of values of the diameters of voids converted in terms of the diameters of spheres having the same volumes as the voids, the ratio D3/D2 of the diameter D3 indicating the maximum diameter in an area where a proportion of the cumulative number of diameter values counted from the minimum converted value of the diameters of the voids is 90%, to the diameter D2 indicating the maximum diameter in an area where a proportion of the cumulative number of diameter values counted from the minimum converted value of the diameters of the voids is 10%, satisfies $2.5 \times D1 \geq D3/D2$.

As a result, the dependence of the haze on the viewing angle when applying a voltage can be reduced, and high shielding ability when not applying a voltage, driving with a low voltage when applying a voltage, and reduced haze when applying a voltage can be realized.

**Claims**

1. A light adjuster comprising:

   a liquid crystal layer having a plurality of voids therein, each of said voids being filled with a liquid crystal material;
   a pair of substrates that sandwich said liquid crystal layer therebetween, at least one of said substrates being transparent; and
   transparent electrically conductive films provided on respective facing surfaces of said substrates;
   wherein:

   said liquid crystal material has a birefringence $\Delta n$ in a range of $0.12 \geq \Delta n \geq 0.08$;
   a product of a diameter D1 of a sphere having a same volume as a volume of each of said voids and the birefringence $\Delta n$ is in a range of $0.5\mu m \geq \Delta n \times D1 \geq 0.45\mu m$; and
   in a cumulative value distribution of values of the diameters of voids converted in terms of diameters of spheres having the same volumes as said voids, a ratio D3/D2 of a diameter D3 indicating a maximum diameter in an area where a proportion of a cumulative number of diameter values counted from a minimum converted value of the diameters of said voids is 90%, to a diameter D2 indicating a maximum diameter in an area where the proportion of the cumulative number of diameter values counted from the minimum converted value of the diameters of said voids is 10%, satisfies $2.5 \times D1 \geq D3/D2$.

2. A laminated glass comprising:

   a light adjuster comprising a liquid crystal layer having a plurality of voids therein, each of said voids being filled with a liquid crystal material, a pair of substrates that sandwich said liquid crystal layer therebetween, at least one of said substrates being transparent, and transparent electrically conductive films provided on respective facing surfaces of said substrates;
   wherein:

   said liquid crystal material has a birefringence $\Delta n$ in a range of $0.12 \geq \Delta n \geq 0.08$;
   a product of a diameter D1 of a sphere having a same volume as a volume of each of said voids, and the birefringence $\Delta n$ is in a range of $0.55\mu m \geq \Delta n \times D1 \geq 0.45\mu m$; and
   in a cumulative value distribution of values of the diameters of voids converted in terms of diameters of spheres having the same volumes as said voids, a ratio D3/D2 of a diameter D3 indicating a maximum diameter in an area where a proportion of a cumulative number of diameter values counted from a minimum converted value of the diameters of said voids is 90%, to a diameter D2 indicating a maximum diameter in an area where the proportion of the cumulative number of diameter values counted from the minimum converted value of the diameters of said voids is 10%, satisfies $2.5 \times D1 \geq D3/D2$.

# FIG. 1

100

105b  106b  104  106a  105a

102

101  103

# FIG. 2

```
┌─────────────────────────┐
│   MANUFACTURE OF LIGHT   │
│     ADJUSTING SHEET      │
└─────────────────────────┘
              │
              ▼
┌─────────────────────────┐
│      FORM TRANSPARENT    │──── S20
│ELECTRICALLY CONDUCTIVE FILMS│
└─────────────────────────┘
              │
              ▼
┌─────────────────────────┐
│     PREPARE EMULSION     │──── S21
└─────────────────────────┘
              │
              ▼
┌─────────────────────────┐
│       FORM MEDIUM        │──── S22
└─────────────────────────┘
              │
              ▼
┌─────────────────────────┐
│  FORM LIQUID CRYSTAL LAYER │──── S23
└─────────────────────────┘
              │
              ▼
┌─────────────────────────┐
│     STICK ON PET FILM    │──── S24
└─────────────────────────┘
              │
              ▼
┌─────────────────────────┐
│           END            │
└─────────────────────────┘
```

## INTERNATIONAL SEARCH REPORT

| International application No. |
| --- |
| PCT/JP03/17040 |

| A. CLASSIFICATION OF SUBJECT MATTER |
| --- |
| Int.Cl⁷ G02F1/1334, G02F1/13 |

According to International Patent Classification (IPC) or to both national classification and IPC

| B. FIELDS SEARCHED |
| --- |
| Minimum documentation searched (classification system followed by classification symbols) |
| Int.Cl⁷ G02F1/1334, G02F1/13 |

Documentation searched other than minimum documentation to the extent that such documents are included in the fields searched

| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X | JP 11-95195 A (Sharp Corp.), 09 April, 1999 (09.04.99), Par. Nos. [0008], [0029], [0038], [0039] (Family: none) | 1–2 |
| X | JP 6-18860 A (Nippon Sheet Glass Co., Ltd.), 28 January, 1994 (28.01.94), Par. Nos. [0023] to [0025], [0053] (Family: none) | 1–2 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 January, 2004 (27.01.04) | 10 February, 2004 (10.02.04) |

| Name and mailing address of the ISA/ | Authorized officer |
| --- | --- |
| Japanese Patent Office | |
| Facsimile No. | Telephone No. |

Form PCT/ISA/210 (second sheet) (July 1998)